# EUROPEAN PATENT APPLICATION

(11) **EP 1 445 064 A1**
(43) Date of publication of application: **11.08.2004**
(21) Application number: 01976789.6
(22) Date of filing: 19.10.2001
(51) Int. Cl.: B23Q 3/10, F15B 15/26

(54) **WORK SUPPORT**

(71) Applicant: Pascal Engineering Corporation, Hyogo 666-0016 (JP)
(72) Inventor: KAWAKAMI, Takayuki, c/o PASCAL ENGINEERING CORP, Hyogo 666-0016 (JP)
(74) Representative: Senior, Alan Murray
(86) International application number: PCT/JP2001/009235
(87) International publication number: WO 2003/035323

(57) **Abstract**

There is provided a workpiece support that eliminates negative pressure in the oil chamber connected to the external peripheral hydraulic chamber, and that has highly reliable support functionality. A compressed air supplying mechanism (6) is provided for supplying compressed air to an air passage (41), the pressure intensifying piston member (10) is configured with a cross-wise divided structure, and a plurality of grooves (54) used as air passages running from the compressed air supplying mechanism (6) to the air passage (41) is formed on the bottom surface of the first piston member (52) of the pressure intensifying piston member (10), whereby negative pressure is eliminated in the annular oil chamber (57) leading to the external peripheral hydraulic chamber (39), and penetration of air or compressed air is prevented when the pressure intensifying piston member (10) is moved downward, because only the second piston member (53) of the pressure intensifying piston member (10) is forcibly actuated by compressed air, and the first piston member (52) moves downward by means of the elastic retraction of the sleeve body (9).

## Description

### TECHNICAL FIELD

The present invention relates to a workpiece support that is designed such that a sleeve body capable of elastic deformation is elastically deformed by oil pressure to lock a rod, and particularly relates to a workpiece support provided with support functionality with excellent reliability.

### BACKGROUND OF THE INVENTION

Machining precision has been hindered in the past by elastic deformation and vibration of the workpiece when workpiece fixed by a workpiece support is put up for machining. Therefore, workpiece supports have been put into use that hold the workpiece being machined from the side opposite the machining side.

The present applicant has also proposed and submitted patent applications for various workpiece supports (also referred to as hydraulic locking devices), and in particular has proposed and implemented structurally simplified workpiece supports (see Japanese Utility Model Laid-open Application Nos. S59-128902 and H6-47710).

These workpiece supports are configured such that a sleeve body integrated with or separate from a piston member is elastically deformed by oil pressure so as to shrink in diameter, and a rod is locked by static friction that acts between the sleeve body and the rod.

In the case of this configuration, the locking force is small if the oil pressure for causing elastic deformation of the sleeve body is low. A large workpiece support is necessary in order to generate a large locking force, which is a disadvantage in terms of equipment cost. Also, a high oil pressure must be supplied from the oil pressure supply source, the oil pressure supply source is enlarged, hydraulic leaks become more likely, and costs rise.

Therefore, the present applicants have conceived of and are in the process of inventing a workpiece support for locking a rod by compressed air in order to miniaturize the workpiece support and to achieve increased output. In this workpiece support, oil is filled in advance into an external peripheral hydraulic chamber formed on the external periphery of the sleeve body and into a annular oil chamber linked to the external peripheral hydraulic chamber, and the oil is pressurized by compressed air by means of a pressure intensifying piston member.

When workpiece is supported by this workpiece support, compressed air is supplied from a compressed air supply source to an air input port after the workpiece is set and fixed in place by one or more separate clamping devices. Whereupon, the piston member advances upward against the urging force of a rod-retracting compression coil spring, and the rod advances upward by the urging force of a rod-advancing compression coil spring.

After the output portion at the leading end of the rod comes in contact with the workpiece with a small force, compressed air is supplied to the lower air operating chamber of the pressure intensifying piston member to cause the pressure intensifying piston member to slide upward. The oil in the external peripheral hydraulic chamber is thereby pressurized, the thin-walled cylinder of the sleeve body is caused to elastically deform so as to shrink in diameter, thereby pressing firmly against and locking the rod, and the workpiece is held and supported by the rod.

When the rod is retracted, the supply of compressed air to the aforementioned lower air operating chamber and the air input port connected to the piston member is stopped, compressed air is supplied to the upper air operating chamber of the pressure intensifying piston member, and the pressure intensifying piston member is caused to slide downward. The piston member then moves back by the urging force of the compression coil spring, and the rod is retracted backwards.

However, when the rod is caused to retract in the workpiece support in which the rod is locked by compressed air, negative pressure is created in the annular oil chamber on the internal periphery of the pressure intensifying piston member when the pressure intensifying piston member is forcibly slid downward by compressed air. Air or compressed air thereby penetrates into the annular oil chamber and external peripheral hydraulic chamber. When compressible gas penetrates into the external peripheral hydraulic chamber, the oil pressure ceases to recover, friction between the rod and the sleeve body decreases, and the support functionality of the workpiece support declines.

An object of the present invention is to provide a workpiece support that eliminates negative pressure in the oil chamber connected to the external peripheral hydraulic chamber, and that is provided with support functionality having excellent reliability.

### DISCLOSURE OF THE INVENTION

The workpiece support of the present invention has a rod; a sleeve body that is externally fitted on the rod and that is elastically deformable so as to shrink in diameter; a case member for supporting the sleeve body; a scraper externally fitted on the rod and retained at the leading end of the case member, for scraping debris adhering to the external peripheral surface of the rod when the rod is retracted; and an external peripheral hydraulic chamber formed on the external periphery of the sleeve body; further characterized by comprising pressure intensifying means for compressing oil filled into the external peripheral hydraulic chamber by compressed air by means of a pressure intensifying piston member; an air passage formed between the rod and the internal peripheral surface of the sleeve body, with the passage connected to the gap between the rod and the scraper; and compressed air supplying means for supplying compressed air to the air passage; wherein the pressure intensifying piston member is configured with a crosswise-divided structure, and a plurality of grooves used as air passages running from the compressed air supplying means to the air passage are formed on at least one of the divided surfaces of the pressure intensifying piston member.

When workpiece put up for machining is held and supported by the workpiece support, the workpiece is set on top of the workpiece support and fixed in place by one or more separately provided clamping devices. The rod is then caused to protrude, and after the output portion at the leading end of the rod comes in contact with the workpiece with an extremely weak force, the pressure intensifying piston member of the pressure intensifying means is caused to slide. Oil in the external peripheral hydraulic chamber is thereby compressed, the sleeve body is elastically deformed so as to shrink in diameter and is caused to press firmly against the rod to lock the rod, and the workpiece is held by the rod and supported.

When the rod is retracted, actuation of the pressure intensifying means is stopped, compressed air is supplied by the compressed air supplying means to the air passage through the plurality of grooves, and the air is expelled from the small gap between the rod and the scraper. At the same time, the divided section on the input side of the pressure intensifying piston member separates from the divided section on the output side and is caused to slide, the divided section on the output side moves somewhat behind time, and oil pressure in the external peripheral hydraulic chamber decreases. The rod is then taken out of the locked state and retracts backward.

At this time, only the divided section of the pressure intensifying piston member on the input side is first forced to slide by compressed air, and the divided section on the output side of the pressure intensifying piston member subsequently moves downward after the elastic retraction of the sleeve body, so negative pressure does not occur in the oil chamber leading to the external peripheral hydraulic chamber, and air or compressed air can be prevented from penetrating into the external peripheral hydraulic chamber. Thus, because compressible gas does not penetrate into the external peripheral hydraulic chamber, the rod can be reliably locked and the workpiece can be supported by reliable compression of the oil in the external peripheral hydraulic chamber.

Also, the workpiece support may have pressure intensifying means for compressing oil filled into the external hydraulic chamber by compressed air by means of a pressure intensifying piston member; a pressure-receiving chamber for allowing compressed air to receive pressure from the base end portion of the rod in order to urge the rod to protrude; and compressed air supplying means for supplying compressed air to the pressure-receiving chamber; wherein the pressure intensifying piston member comprises a crosswise-divided structure, and a plurality of grooves used as air passages running from the compressed air supplying means to the pressure-receiving chamber are formed on at least one of the divided surfaces of the pressure intensifying piston member.

In this case, when workpiece is held and supported by the workpiece support, the workpiece is set on top of the workpiece support and fixed in place by one or more separately provided clamping devices. Compressed air from the compressed air supplying means is then supplied to the pressure-receiving chamber through the plurality of grooves, whereupon the rod is caused to protrude upward, and the output portion on the leading end of the rod comes in contact with the workpiece with an extremely weak force.

The pressure intensifying piston member of the pressure intensifying means is then caused to slide, whereupon the oil in the external peripheral hydraulic chamber is compressed, the sleeve body is elastically deformed so as to shrink in diameter and is caused to press firmly against the rod to lock the rod, and the workpiece is held by the rod and supported.

When the rod is retracted, actuation of the pressure intensifying means is stopped, whereupon the divided section on the input side of the pressure intensifying piston member separates from the divided section on the output side and is caused to slide by means of compressed air supplied by the compressed air supplying means, and the divided section on the output side moves somewhat behind time.

Also, air operating chambers may be formed at the top and bottom sides of the pressure intensifying piston member of the pressure intensifying means. In this case, by supplying compressed air to the bottom air operating chamber, the divided section on the input side of the pressure intensifying piston member and the divided section on the output side are driven upward in integrated fashion, and the oil in the external peripheral hydraulic chamber is compressed.

In this arrangement, a configuration may be adopted whereby the pressure intensifying means has an annular oil chamber disposed in the internal periphery of the pressure intensifying piston member and connected to the external peripheral hydraulic chamber. In this case, the oil pressure of the external peripheral hydraulic chamber can be controlled by causing the pressure intensifying piston member to slide, thus increasing or decreasing the volume of the annular oil chamber. A rod-advancing compression coil spring may also be provided in the workpiece support. Furthermore, a rod-retracting coil spring may also be provided.

### BRIEF DESCRIPTION OF THE DRAWINGS

Fig. 1 is a front view of the workpiece support according to an embodiment of the present invention; and
Fig. 2 is a vertically cross-sectional view showing the workpiece support in a standby state;
Fig. 3 is a vertically cross-sectional view showing the workpiece support in a rocked state;
Fig. 4 is a vertically cross-sectional view showing the workpiece support in a rock-released state; and
Fig. 5 is a vertically cross- sectional view showing the workpiece support in a rock-released state of a modified embodiment.

### PREFERRED EMBODIMENT OF THE INVENTION

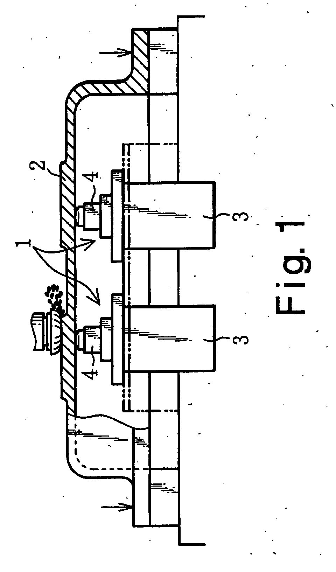

An embodiment of the present invention will be described hereinafter with reference to the drawings. As shown in Fig. 1, the workpiece support 1 supports the central portion of the workpiece 2 to be machined from beneath for preventing elastic deformation or vibration of the workpiece 2.

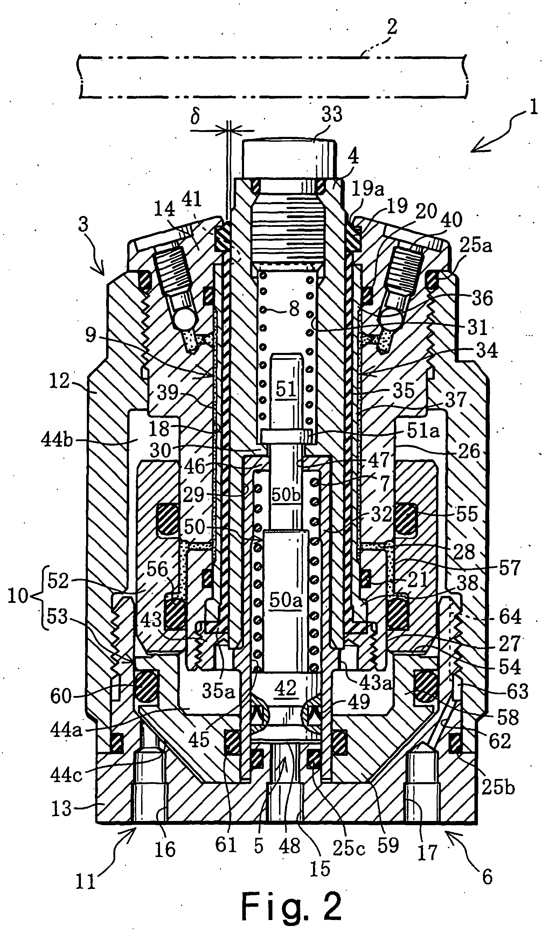

As shown in Fig. 2 through 4, the workpiece support 1 has a substantially cylindrical case member 3, a rod 4, an air cylinder 5 for actuating the rod 4, a compressed air supplying mechanism 6, compression coil springs 7, 8, a sleeve body 9 externally and slidably fitted on the rod 4, a pressure intensifying mechanism 11 for compressing oil by compressed air by means of the pressure intensifying piston member 10.

First, description will be made on the case member 3. As shown in Figs. 2 through 4, the case member 3 is for carrying and supporting the rod 4 and sleeve body 9, and the case member 3 comprises an outer case 12 open at both ends, a bottom case 13 and an inner case 14.The bottom case 13 is fitted and screwed inside the bottom end of the outer case 12, and air input ports 15, 16, and 17 are formed in the bottom case 13. An inner case 14 is fitted and screwed inside the top end of the outer case 12, a sleeve body accommodating hole 18 is formed in the internal periphery of the inner case 14, and a scraper 19 and seal members 20, 21 are also mounted in the internal periphery of the inner case 14.

The scraper 19 made of synthetic resin is fitted around the rod 4 and in held at the top end wall of the inner case 14. The scraper 19 has a edge portion 19a for scraping fine shavings and dust on the outer peripheral surface of the rod 4, while the rod 4 is retracting. The large-diameter portion 26 and small-diameter portion 27 of the bottom half of the inner case 14 are formed on the same shaft. A plurality of horizontally oriented communicating passage 28 is formed in the wall near the shoulder between the large-diameter portion 26 and small-diameter portion 27, and a portion of the pressure intensifying piston member 10 is externally and slidably fitted on the large-diameter portion 26 and small-diameter portion 27. Seal members 25a, 25b, and 25c are also mounted.

The rod 4 will next be described. The rod 4 is slidably inserted into the sleeve body 10, a cylinder hole 29 with a length corresponding to approximately 2/5 of the entire length of the rod 4 is formed inside the rod 4 from the bottom end, and a cylindrical hole 31 with a smaller diameter than the cylinder hole 29 is formed in the upper portion than the cylinder hole 29 across a middle wall 30. A cylinder main body 32 of the air cylinder 5 is fitted inside the cylinder hole 29, and the rod 4 guided by the sleeve body 10 and guide barrel 29 is configured so as to be able to slide up and down.

An output portion 33 is screwed and fixed to the top end of the rod 4, and the output portion 33 makes contact with the workpiece 2 when the workpiece 2 is supported.

The sleeve body 9 will next be described. The sleeve body 9 comprises a metal outer sleeve 34 on the outside and a synthetic resin inner sleeve 35 on the inside, and the inner sleeve 35 is externally and slidably fitted on the rod 4 with a minimal gap. The outer sleeve 34 comprises securing ring top 36, thin-walled cylinder 37, and securing ring bottom 38 which are formed in order from top to bottom thereof, and the securing ring top 36, thin-walled cylinder 37 and securing ring bottom 38 are integrally formed.

The securing ring top 36 is latched onto the top end wall of the inner case 14 from above, and the top end of the inner sleeve 35 is latched onto the scraper 19 from above. The securing ring bottom 38 engages integrally with a flange 35a formed in the bottom end of the inner sleeve 35, and the flange 35a and securing ring bottom 38 are sandwiched and fixed between the inner case 14 and the cylinder main body 32 of the air cylinder 5. The thin-walled cylinder 37 is configured to be capable of elastic deformation so as to shrink in diameter, and an annular external peripheral hydraulic chamber 39 is formed on the external periphery of the thin-walled cylinder 37. The external peripheral hydraulic chamber 39 contains oil filled therein through a plurality of filling vents 40 formed in the top end wall of the inner case 14.

An air passage 41 is formed between the rod 4 and the internal peripheral surface of the inner sleeve 35, compressed air is supplied at a pressure (0.02 MPa, for example) that is at or above the contact pressure of the scraper 19 from the air input port 17 to the air passage 41, and the compressed air is supplied through the air passage 41 to the small gap δ between the rod 4 and the scraper 19 and is expelled to the outside.

The air cylinder 5 will next be described. As shown in Figs. 2 through 4, the air cylinder 5 has a cylinder main body 32 and a piston member 42. A flange 43 is formed partway along the length direction of the external periphery of the cylinder main body 32, and the flange 43 is fitted and screwed inside the bottom end of the inner case 14. A plurality of upright communicating passages 43a are formed in the flange 43 to allow compressed air supplied by the compressed air supplying mechanism 6 to the air operating chamber 44a to be fed to the air passage 41.

A cylinder hole 45, which also serves as a spring containing hole, is formed in the cylinder main body 32, and a piston member 42 is slidably mounted in the cylinder hole 45. An opening 47 is formed in the top wall 46 of the cylinder main body 32. The air operating chamber 48 of the air cylinder 5 is formed by the internal peripheral surface of the cylinder hole 45, the piston member 42, and the bottom case 13; compressed air is supplied from a compressed air supply source (not shown) to the air operating chamber 48 through an air input port 15; and the piston member 42 is caused to slide upward. A seal member 49 is also provided.

The compression coil spring 7 for retractably actuating the piston member 42 and the rod 4 downwards will next be described. A spring member 7 for elastically urging the rod 4 downward is contained in the cylinder hole 45, the bottom end of the spring member 7 is held by the piston member 42, the top end of the spring member 7 is held by the top wall 46 of the cylinder member 22. When the air cylinder 5 is in the non-operating state shown in Fig. 2, the piston member 42 and the rod 4 are elastically urged downward with respect to the cylinder member 22 by the spring member 7.

The piston rod 50, the shaft member 51, and the compression coil spring 8 will next be described. The upright piston rod 50 is integrally formed with the piston member 42, the piston rod 50 comprises a large-diameter portion 50a and a small-diameter portion 50b, and flanged shaft member 51 is screwed to the top end of the small-diameter portion 50b. The small-diameter portion 50b runs through the opening 47 in the top wall 46 and the center hole of the middle wall 30 into the cylindrical hall 31, and the shaft member 51 is inserted so as to be capable of moving up and down in the cylindrical hole 31 above the middle wall 30.

A spring member 8 is contained in the cylindrical hole 31, the bottom end thereof is held by the flange 51a of the shaft member 51, the top end thereof is held by the output portion 33 of the rod 4, and the rod 4 is elastically urged upward with respect to the shaft member 50,51 and the piston member 30 by the spring member 8.

The urging force (i.e. spring length, spring constant) of the spring 8 is set so as to be capable of driving the rod 4 upwards when supporting the workpiece 2, so that the rod 4 may come into contact with the workpiece 2 with a weak urging force without causing the elastic deformation of the workpiece 2.

The pressure intensifying compressing mechanism 11 will next be described. As shown in Fig. 2 to 4, the pressure intensifying piston member 10 of the pressure intensifying mechanism 11 is mounted so as to be capable of sliding up and down in the annular space formed by the outer case 12, inner case 14, cylinder main body 32, and bottom case 13. The pressure intensifying piston member 10 has a first piston member 52 constituting the upper half thereof and a second piston member 53 constituting the lower half thereof, and comprises a crosswise-divided structure; an air operating chamber 44b is formed above the pressure intensifying piston member 10; and an air operating chamber 44c is formed below the pressure intensifying piston member 10.

Among the divided surfaces of the pressure intensifying piston member 10, there is formed in the bottom surface of the first piston member 52 a plurality of grooves 54 used as air passages leading to the air passage 41 from the compressed air supply source via the air operating chamber 44a and the plurality of connecting passages 43a. The top end portion of the first piston member 52 is externally and slidably fitted on the large-diameter portion 26 of the inner case 14, the bottom end portion is externally and slidably fitted on the small-diameter portion 27 of the inner case 14, and seal members 55 and 56 are also mounted thereto. An annular oil chamber 57 connected to the external peripheral hydraulic chamber 39 via the plurality of connecting passages 28 is formed in the internal periphery of the first piston member 52.

The second piston member 53 has a large-diameter portion 58 formed in the upper half thereof, and a small diameter portion 59 formed in the lower half thereof and integrally connected with the large-diameter portion 58.

The external peripheral surface of the large-diameter portion 58 is slidably fitted inside the bottom case 13, the internal peripheral surface of the small-diameter portion 59 is externally and slidably fitted on the cylinder main body 32, and the air operating chamber 44a is mainly formed by the cylinder main body 32 and the second piston member 53. Seal members 60 and 61 are also provided. A configuration is adopted whereby compressed air is supplied from a compressed air supply source to the air input port 16 to integrally drive the first and second piston members 52 and 53 upward, thereby reducing the volume of the annular oil chamber 57 and compressing the oil in the external peripheral hydraulic chamber 39.

The compressed air supplying mechanism 6 will next be described. The compressed air supplying mechanism 6 for supplying compressed air to the air passage 41 comprises a compressed air supply source; an air input port 17; a plurality of passages 62, 63, and 64; a groove 54; an air passage 41; and the like. A diagonal passage 62 slanting upward from the air input port 17, an annular passage 63, and a groove-shaped passage 64 partially formed in the screw portion of the bottom case 13 are formed in the bottom case 13.

A configuration is adopted whereby compressed air is supplied from the compressed air supply source to the air input port 17; fed through the diagonal passage 62, annular passage 63, groove-shaped passage 64, and the plurality of grooves 54; and supplied to the air passage 41 via the plurality of connecting passages 43a.

The operation of the work support 1 will next be described. When workpiece 2 to be machined is held and supported from underneath by one or more workpiece supports 1, as shown in Fig. 1, compressed air is supplied from the compressed air supply source to the air operating chamber 48 through the air input port 15, and the air cylinder 5 is actuated after the workpiece 2 is set on top of the workpiece support 1 and the external peripheral portion of the workpiece 2 is secured by a plurality of clamping devices (not shown).

After that, as shown in Fig.2, the piston member 42, piston rod 50 and shaft member 51 are driven to slide upwards against the urging force of the compression spring 7. As the spring 8 shrinks to cause increase of the urging force thereof, the rod 4 moves upwards with the weak urging force.

After the output member 33 of the rod 4 comes in contact with the workpiece 2 with a weak force and the rod 4 is in a stopped position, the pressure intensifying piston member 11 of the pressure intensifying compressing mechanism 11 is caused to slide upwards.

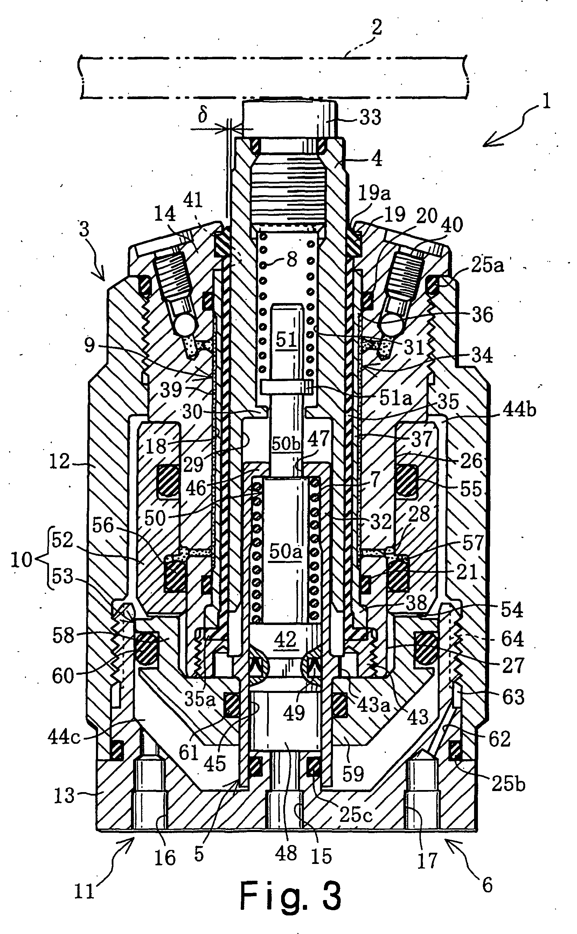

Specifically, as shown in Fig. 3, compressed air is supplied from the compressed air supply source to the air input port 16, the first and second piston members 52, 53 are integrally driven upward, and the volume of the annular oil chamber 57 is reduced. The oil in the external peripheral hydraulic chamber 39 is thereby compressed, the thin-walled cylinder 37 of the outer sleeve 34 is elastically deformed so as to shrink in diameter, the inner sleeve 35 presses firmly against the rod 4 and locks the rod 4, and the workpiece 2 is held and supported by the rod 4. With the workpiece 2 thus supported by one or more of workpiece supports 1, one or more clamping devices are caused to clamp onto and secure the workpiece 2 as needed, and machining is performed with the workpiece 2 in this state.

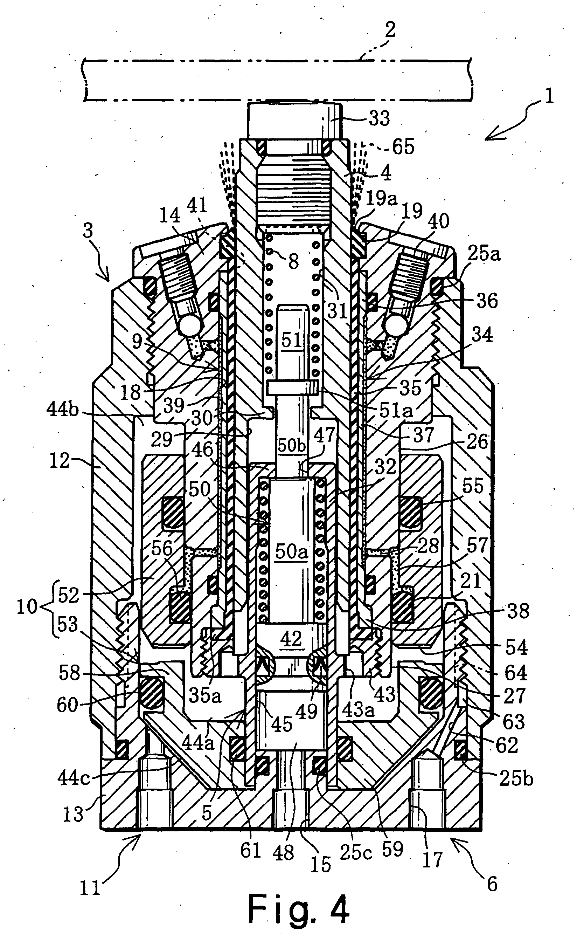

As shown in Fig. 4, when the rod 4 is retracted after machining of the workpiece 2 has been completed, actuation of the air cylinder 5 and pressure intensifying mechanism 11 is stopped, and the compressed air supplying mechanism 6 is actuated. In other words, a direction-switching valve is switched and the compressed air supplied from the compressed air supply source is fed to the air input port 17. Compressed air is then supplied at a pressure (0.02 MPa, for example) that is at or above the contact pressure of the scraper 19 to the air passage 41 through the diagonal passage 62, annular passage 63, groove-shaped passage 64, and plurality of grooves 54, and via the air operating chamber 44a and the plurality of connecting passages 43a, and is expelled from the small gap δ between the rod 4 and the scraper 19.

Almost all cutting oil, fine shavings, dust, and other debris adhering to the external peripheral surface of the rod 4 are scraped off by the scraper 19 when the rod 4 is retracted, and the debris scraped off and separated from the surface of the rod 4 is thoroughly blown off by the compressed air stream 65 expelled from the small gap δ.

Also, the second piston member 53 separates from the first piston member 52 and is caused to slide downward by this compressed air, and the first piston member 52 moves downward somewhat behind time after the elastic retraction of the sleeve body 9. The volume of the annular oil chamber 57 is thereby increased and the oil pressure in the external peripheral hydraulic chamber 39 is lowered. After locking of the rod 4 by the sleeve body 9 is released, the piston member 42, piston rod 50, and shaft member 51 are backed in downward by the urging force of the compression coil spring 7, the flange 51a comes in contact with the middle wall 30, and, as shown in Fig. 2, the rod 4 also moves in conjunction with the downward retraction of the shaft member 51 and is retracted downward.

In the workpiece support 1 described above, the pressure intensifying piston member 10 is configured with a crosswise-divided structure, and a plurality of grooves 54 used as air passages leading from the compressed air supply source to the air passage 41 is formed in the bottom surface of the first piston member 52, so the second piston member 53 alone is first forced to slide, and the first piston member 52 is subsequently retracted downward, when the pressure intensifying piston member 10 is caused to slide downward.

Consequently, negative pressure does not occur in the annular oil chamber 57, and penetration of air or compressed air into the annular oil chamber 57 and the external peripheral hydraulic chamber 39 can be prevented. Thus, because compressible gas does not penetrate into the external peripheral hydraulic chamber 39, the oil in the external peripheral hydraulic chamber 39 can be reliably compressed, and the rod 4 can be reliably locked to support the workpiece 2. The need for an oil supply unit is also eliminated, thus reducing equipment cost, because the rod 4 and the pressure intensifying piston member 10 can be actuated solely by compressed air and the compression coil springs 7, 8.

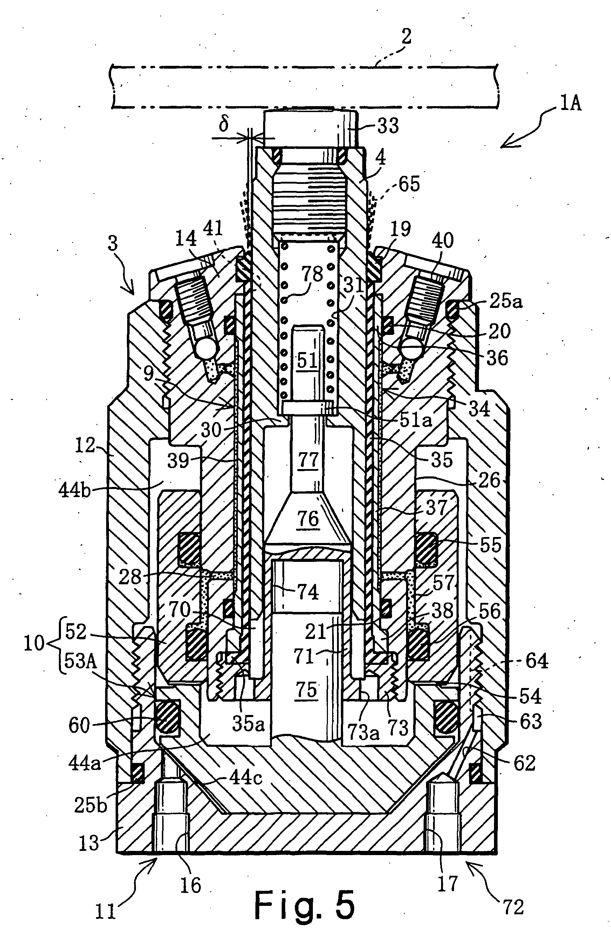

Partial modifications of the present embodiment will next be described. The same numeral references are used for the same references in the aforementioned embodiment, and description thereof is omitted as appropriate.
1) As shown in Fig. 5, in the workpiece support 1A according to a modified embodiment, an annular pressure-receiving chamber 70 is formed for allowing compressed air to receive pressure from the base end portion of the rod 4 in order to urge the rod 4 to protrude, and the pressure-receiving chamber 70 is formed by the lower half of the rod 4, the sleeve body 9, and the substantially cylindrical supporting member 71. A compressed air supplying mechanism 72 is also provided for supplying compressed air to the pressure-receiving chamber 70.
   A flange 73 is formed in the bottom end of the rod-supporting member 71, and the flange 73 is fitted and screwed into the bottom end of the inner case 14. A plurality of upright communicating passages 73a for guiding compressed air supplied from the compressed air supplying mechanism 72 to the air operating chamber 44a to the pressure-receiving chamber 70 is formed in the flange 73. A configuration is adopted whereby a piston-containing hole 74 is formed in the rod-supporting member 71, and the center shaft 75 of the second piston member 53A is guided and supported so as to be able to slide up and down.
   A shaft 77 is integrally formed in the top end of the rod-supporting member 71 via a tapered portion 76, and the shaft member 51 is screwed into the top end of the shaft 77. Part of the shaft 77 inserts into the center hole of the middle wall 30 and reaches into the cylinder hole 31, and the shaft member 51 is inserted into the cylinder hole 31. The bottom end of the compression coil spring 78 for causing the rod 4 to retract is fixed to the flange 51a of the shaft member 51, the top end of the compression coil spring 78 is fixed to the output member 33 of the rod 4, and the rod 4 is elastically urged downward.
   When workpiece 2 is supported by this workpiece support 1A, the workpiece 2 is set on top of the workpiece support 1A and fixed by clamping devices, and compressed air is then supplied to the air input port 17 and caused to exert pressure on the base end portion of the rod 4 in the same manner as in the aforementioned embodiment. The rod 4 is thereby caused to protrude upward against the urging force of the compression coil spring 78 for causing the rod 4 to retract, and the output portion 33 on the leading end thereof comes in contact with the workpiece 2 with a weak force.
   Compressed air is then supplied from the compressed air supply source to the air input port 16, the first and second piston members 52, 53A are caused to slide integrally upward, and machining is performed after the volume of the annular oil chamber 57 is reduced and the workpiece 2 is fixed in the same manner as in the aforementioned embodiment. At this time, cutting oil, fine shavings, dust, and the like can be prevented from penetrating between the rod 4 and the sleeve body 9 by feeding compressed air to the air passage 41 through the diagonal passage 62, annular passage 63, groove-shaped passage 64, and plurality of grooves 54, and via the air operating chamber 44a and the plurality of connecting passages 43a, and expelling the compressed air from the small gap δ between the rod 4 and the scraper 19.
   When the rod 4 is retracted, actuation of the pressure intensifying mechanism 11 is stopped, whereupon the second piston member 53A is separated from the first piston member 52 and is caused to slide downward by compressed air supplied from the compressed air supplying mechanism 72, and the first piston member 52 moves downward somewhat behind time after the elastic retraction of the sleeve body 9. After the locked state of the rod 4 by the sleeve body 9 is released, the rod 4 is retracted downward by the urging force of the compression coil spring 78. Consequently, the same advantages are obtained as in the aforementioned embodiment.
2) A plurality of grooves used as air passages may also be formed in the top surface of the second piston member, and a configuration may be adopted whereby a plurality of grooves is formed in only one of either the first piston member or the second piston member.
3) The sleeve body may be constituted with a single metal sleeve body in which the synthetic resin inner sleeve is omitted. There may also be other aspects in which various modifications to the aforementioned embodiment are implemented in the aforementioned embodiments insofar as such modifications are within a range of the essence of the present invention.

## Claims

1. A workpiece support comprising a rod; a sleeve body that is externally fitted on the rod and that is elastically deformable so as to shrink in diameter; a case member for supporting the sleeve body; a scraper externally fitted on the rod and retained at the leading end of the case member, for scraping debris adhering to the external peripheral surface of the rod when the rod is retracted; and an external peripheral hydraulic chamber formed on the external periphery of the sleeve body; **characterized by** further comprising:
pressure intensifying means for compressing oil filled into the external peripheral hydraulic chamber by compressed air by means of a pressure intensifying piston member;
an air passage formed between the rod and the internal peripheral surface of the sleeve body, the air passage connected to the gap between the rod and the scraper; and
compressed air supplying means for supplying compressed air to the air passage; wherein
the pressure intensifying piston member comprises a crosswise-divided structure, and a plurality of grooves used as air passages running from the compressed air supplying means to the air passage are formed on at least one of the divided surfaces of the pressure intensifying piston member.

2. A workpiece support comprising a rod; a sleeve body that is externally fitted on the rod and that is elastically deformable so as to shrink in diameter; a case member for supporting the sleeve body; and an external peripheral hydraulic chamber formed on the external periphery of the sleeve body; **characterized in** further comprising:
pressure intensifying means for compressing oil filled into the external peripheral hydraulic chamber by compressed air by means of a pressure intensifying piston member;
a pressure-receiving chamber for allowing the base end portion of the rod to receive pressure from compressed air in order to urge the rod to protrude; and
compressed air supplying means for supplying compressed air to the pressure-receiving chamber; wherein
the pressure intensifying piston member comprises a crosswise-divided structure, and a plurality of grooves used as air passages running from the compressed air supplying means to the pressure-receiving chamber are formed on at least one of the divided surfaces of the pressure intensifying piston member.

3. The workpiece support according to claim 1 or 2, **characterized in that** air operating chambers are formed at the top and bottom sides of the pressure intensifying piston member of the pressure intensifying means.

4. The workpiece support according to claim 3, **characterized in that** the pressure intensifying means has an annular oil chamber disposed in the internal periphery of the pressure intensifying piston member and connected to the external peripheral hydraulic chamber.

5. The workpiece support according to claim 1, **characterized in** comprising a rod-advancing compression coil spring.

6. The workpiece support according to claim 1 or 2, **characterized in** comprising a rod-retracting coil spring.
